Europäisches Patentamt

European Patent Office

Office européen des brevets

(19)

(11) Publication number: **0 205 235**
**A2**

## (12) EUROPEAN PATENT APPLICATION

(21) Application number: **86302570.6**

(22) Date of filing: **07.04.86**

(51) Int. Cl.⁴: **G01D 13/02**

(30) Priority: **11.04.85 US 722289**

(43) Date of publication of application:
**17.12.86 Bulletin 86/51**

(84) Designated Contracting States:
**DE FR GB IT NL**

(71) Applicant: **CONTROL INTERFACE COMPANY LIMITED**
**6 Emery Avenue**
**Randolph New Jersey 07869(US)**

(72) Inventor: **Bohmer, William**
**14 Harwich Road**
**Flanders New Jersey 07836(US)**

(74) Representative: **Moon, Donald Keith et al**
**BREWER & SON 5-9 Quality Court Chancery Lane**
**London WC2A 1HT(GB)**

(54) Method and apparatus for liquid crystal display of analog indicators.

(57) The disclosure relates to liquid crystal display devices for presenting analog displays of electrical input signals which are a function of a variable to be displayed. Liquid crystal material is disposed in the gap between an address electrode 40 plate and a load electrode plate. An array of load electrodes 60 on the load plate are connected to an impedance element 50 which can create a voltage gradient (52, 54) across the array of the load electrodes. The address electrode which is a conductive layer disposed on the address plate is connected to one terminal of the impedance element. The input signal can be an analog voltage proportional to some condition being measured. The input signal is connected to both the impedance element and to the address electrode. The optical properties of the liquid crystal material change at a point where the potential difference between the address electrode and the load electrode places a predetermined or threshold electric field across the liquid crystal. As the input voltage 42 commonly applied to the address electrode and the load electrode is changed, the voltage and gradient along the array of load electrodes changes and the areas of the display which are dark or bright will change in size. The liquid crystal display device is adapted to display analog bar graph presentations without the need for drivers, multiplexers, decoders, or analog-to-digital converters connected to the load electrodes to produce analog indicator displays of various configurations.

Fig.3.

# METHOD AND APPARATUS FOR LIQUID CRYSTAL DISPLAY OF ANALOG INDICATORS

The invention relates to devices for presenting analog displays of electrical input signals which are a function of a variable to be displayed. The variable can include electrical variables such as voltage, current, resistance, etc. In addition, the variables may be those representative of physical conditions such as temperature, pressure, velocity, liquid level and the like. The invention further relates to the use of liquid crystal displays as analog indicators or, in particular, as analog bar graph indicators.

The invention utilizes liquid crystal materials in which the propagation or characteristics of light incident thereon can be altered by inducing an electric or magnetic field in the liquid crystal material. Such liquid crystal materials include, but are not limited to, nematic liquid crystal materials possessing dynamic or quiescent scattering, or twisted field-effect electro-optical properties, and the mixtures of these nematic liquid crystal materials with cholesteric liquid crystal materials.

In a dynamic scattering transmissive liquid crystal material, light is transmitted substantially unaffected through the material in the absence of an electric field across the liquid material. When an electric field of sufficient magnitude is induced in the liquid crystal material, light incident upon the material is optically scattered and transmission of light through the material is substantially prevented. A quiescent scattering transmissive liquid crystal material, in the absence of an electric field, scatters incident light, while an electric field induced in the quiescent liquid crystal material causes it to transmit incident light therethrough.

In a twisted nematic liquid crystal material, layers of molecules at opposed surfaces of the material can be caused to be aligned at an angle with each other in the absence of a field. The molecules between the opposed surfaces have varying alignments with the result that the molecular orientation through the material from one surface to the other is helically "twisted". In the absence of an electric field, linearly polarized light when entering a twisted nematic liquid crystal display, parallel to the optical axis on one side of the display, is rotated by the angle formed by the opposed surface molecules, e.g., 90°, as the light passes through the liquid crystal material. The light then emerges at the other side of the display still linearly polarized. If crossed polarizers are oriented with the parallel director axes on the two plates of the liquid crystal display, the display appears transparent. The application of an electric field to the liquid crystal material above the threshold tilts the director axes parallel to the field. This eliminates the twisted alignment of the molecules with the result that the display appears opaque or dark. Thus, the electric field converts the display device from the twisted transparent off-state to a uniaxial nematic, dark on-state when viewed between properly oriented cross polarizers.

The use of liquid crystal display elements which present information relating to variables such as those of electrical or physical conditions have typically been in connection with the presentation of data in an alphanumeric format. The variables typically displayed on liquid crystal displays are displayed as digital data. In the prior art of indicators, gauges, and the like, analog presentations of conditions such as needle or pointer presentations have been traditionally used. One reason for this is that the observation of a needle or pointer presentation with a known scale of indicia enables the observer to glance at the display and obtain useful information simply by the position of the needle or pointer and without concentrating on the indicia. In more recent years in many applications, needle or pointer presentations have given way to analog bar graph presentations in which the extent or position of a movable bar with respect to fixed indicia provides the analog information. Analog bar graphs have the advantage of needle or pointer presentations in enabling the user to extract valuable and accurate information at a glance. Analog bar graph presentations also have the advantage of enabling a normal, standard, or nominal condition of the bar graph of each of a plurality of presentations disposed adjacent to one another to be placed adjacent a common reference line or location. This arrangement accentuates the departure of any bar graph of the plurality from the normal condition.

In prior attempts to utilize liquid crystal display elements for analog bar graph presentations, it has been necessary to drive each of the individual conductive strips or line electrodes of a parallel array of strips deposited on the face of a plate adjacent to the liquid crystal material by a voltage which is a binary function of the information to be indicated. Thus, one or more lines or strips are either driven on or turned off depending upon the form of the graph to be presented. Such a bar graph presentation typically requires that an electrical or physical condition be first sensed by a transducer to provide an analog electrical signal. The analog signal is then converted to a digital signal. The digital signal is delivered to decoder circuitry having a separate output for each of the conductive strips or lines of the array of the liquid crystal display element. The decoder circuitry in response to the digital input signal drives a line or

strip corresponding to the extent of the bar graph which is to indicate the value of the digital signal. The decoder also controls circuitry to drive the strips below the strip corresponding to the digital signal in order that a full bar graph is presented. In the prior art of liquid crystal display elements for analog bar graph presentations, microprocessors also have been used to drive the individual conductive strips or lines of a liquid crystal display element in response to an electrical input signal.

An object of the invention is to provide an analog display device using a liquid crystal display element without the need of driving the various line or strip electrodes of the array of the liquid crystal display element.

Another object of the invention is to provide an optical presentation of the magnitude of an electrical input signal by means of a liquid crystal display element to which only the electrical input signal is connected.

A further object of the invention is to provide a bar graph presentation of the magnitude of an electrical input signal by means of a liquid crystal display element in which the input signal is applied both across the load electrode of the liquid crystal display element and to the address electrode of the liquid crystal display element.

Still a further object of the invention is to provide an analog bar graph presentation of a voltage by means of a liquid crystal display element.

It is also an object of the invention is to provide flag or annunciator displays and alphanumeric legends alone by means of a liquid crystal display element or in combination with an analog bar graph presentation.

These and other objects, features and advantages of the present invention will become apparent and more readily appreciated from the following detailed description of the preferred exemplary embodiment of the invention, taken in conjunction with the accompanying drawings.

Use of liquid crystal materials in displays of analog indicators as opposed to conventional electrical displays has the advantages of providing very low power consumption and voltage threshold, of long life, of reduced size, of a wide viewing angle in the reflecting mode, and of avoiding image washout at high ambient light levels.

The device of the invention includes liquid crystal material disposed in a gap formed between a pair of spaced plates with an address electrode on one plate and a load electrode on the other plate. The inner surface of the address electrode plate is covered with a substantially conductive material forming an address electrode. The inner surface of the load electrode plate is covered with an array of closely spaced conductive strips or lines, electrically connected to one by another means of a resistive material. A sensor (i.e. a transducer) provides an analog voltage proportional to the value of some condition to be measured (e.g., voltage, current, velocity, rotational speed, temperature, pressure, fuel level, etc.). This analog voltage is then amplified or attenuated and fed into both the address electrode and the load electrode. The resistive material connecting the conductive lines of the load electrode creates a predetermined voltage gradient across the array of conductive lines as determined by the resistance characteristic of the resistive material along its length. Accordingly each line of the load electrode has a different voltage when a voltage is applied to one input terminal of the resistive material and the other end is grounded. The address electrode is adapted to be maintained at a voltage equal to the voltage applied to the input terminal of the resistive material.

At the lines extending from points near the input terminal of the resistive material, the potential difference between those lines and the address electrode and accordingly the electric field across the liquid crystal material will be very small. Therefore, the liquid crystal material in the region of such lines scatters light, if, for example, a quiescent scattering transmissive liquid crystal material is used. At the lines extending from points nearer to the grounded end of the resistive material, the potantial difference between the address and load plates will be approaching maximum and will approximately equal the voltage being applied to the address electrode and the load electrode. Quiescent scattering transmissive liquid crystal material in this region will allow light to pass through.

As the voltage applied to the electrodes from the sensor varies, the maximum potential difference between the address and load electrodes near the grounded terminal of the resistive material will change. The higher the input voltage, the higher the voltage along the conductive lines on the load electrode and the steeper the gradient. As a result the point at which the potential difference between the address and load electrodes will begin to cause quiescent scattering transmissive liquid crystal to transmit light will move closer and closer toward the input terminal of the resistor. When the input voltage drops, the potential difference between the address and load electrodes becomes smaller, and the quiescent scattering liquid crystal will only transmit light near the grounded terminal of the resistive material.

The conductive lines can be placed in a variety of configurations. Thus, the lines can be horizontal and parallel to form a bar graph display or radially arranged triangles to simulate a needle indicator. Depending on the particular type of crystal used, as the condition being measured changes, the potential across the electrodes will change and the areas of the display which are dark or bright will change in size.

Various types of liquid crystal materials can be used in accordance with the invention including transmissive, transflexive, reflective quiescent scattering, dynamic scattering, and field effect liquid crystal materials.

Still other objects and advantages of the invention will be apparent from the specification and drawings.

For a complete understanding of the invention, reference should be made to the following detailed description in connection with the accompanying drawings, in which:

FIG. 1 is a fragmentary perspective view of an automobile dashboard containing several liquid crystal displays of analog indicators in accordance with the invention;

FIG. 2 is a vertical section view showing the configuration of the address electrode in the form of a conductive sheet and the load electrodes in the form of strips on the inner surfaces of the two plates of a liquid crystal display element;

FIG. 3 is a schematic representation of the configuration of the resistor and the conductive sheet of the liquid crystal display element of the invention;

FIG. 4 is a schematic representation of plurality of a vertically extending array of conductive strips of the liquid crystal display-element;

FIG. 5 is a schematic representation of a horizontally extending array of conductive strips of the liquid crystal display element;

FIG. 6 is a schematic representation of a plurality of conductive strips of a liquid crystal display element connected in a serpentine or zig-zag configuration;

FIG. 7 is a schematic representation of the distribution of an electrical input voltage to the plurality of conductive strips of the liquid crystal display element;

FIGS. 8-11 are schematic representations showing the display of a voltmeter utilizing the liquid crystal display of the invention;

FIG. 12 is a schematic representation of a fuel-level indicating system utilizing the liquid crystal display device of the invention;

FIG. 13 is a schematic representation showing the display of a voltmeter utilizing the liquid crystal display of the invention;

FIG. 14 is a vertical section view showing a liquid crystal display device having a reflective layer;

FIGS. 15-19 are schematic representations showing the display of a voltmeter utilizing the liquid crystal display of the invention;

FIGS. 20-21 are schematic representations showing the display of alphanumeric legends utilizing the liquid crystal display of the invention;

FIG. 22 is a perspective view of a liquid crystal display device comprising a combination of an analog bar graph indicator and a flag indicator bearing an alphanumeric legend; and

FIG. 23 is a schematic representation of a liquid crystal display device comprising a combination of an analog bar graph indicator and a flag indicator bearing an alphanumeric legend.

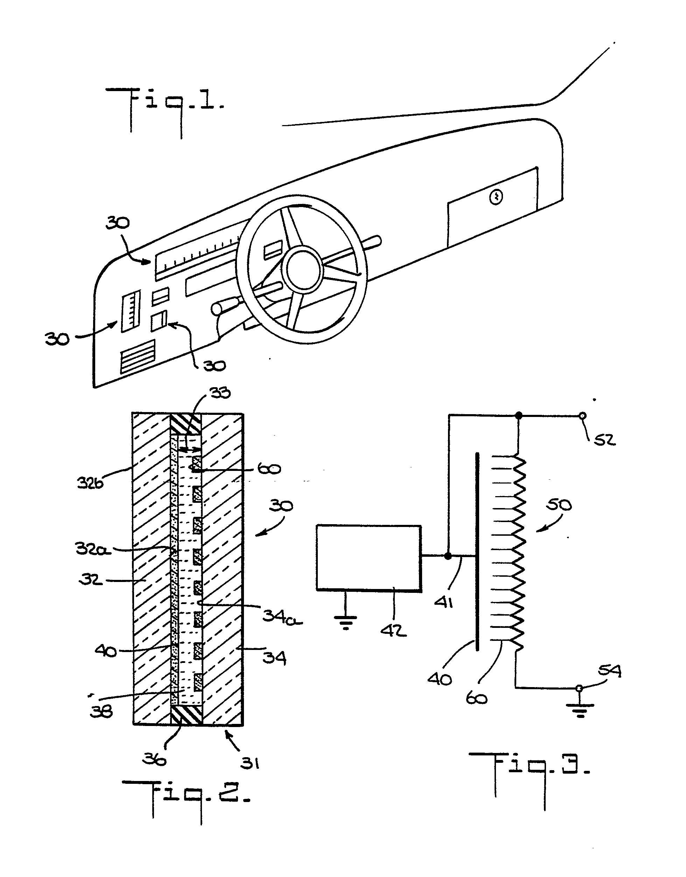

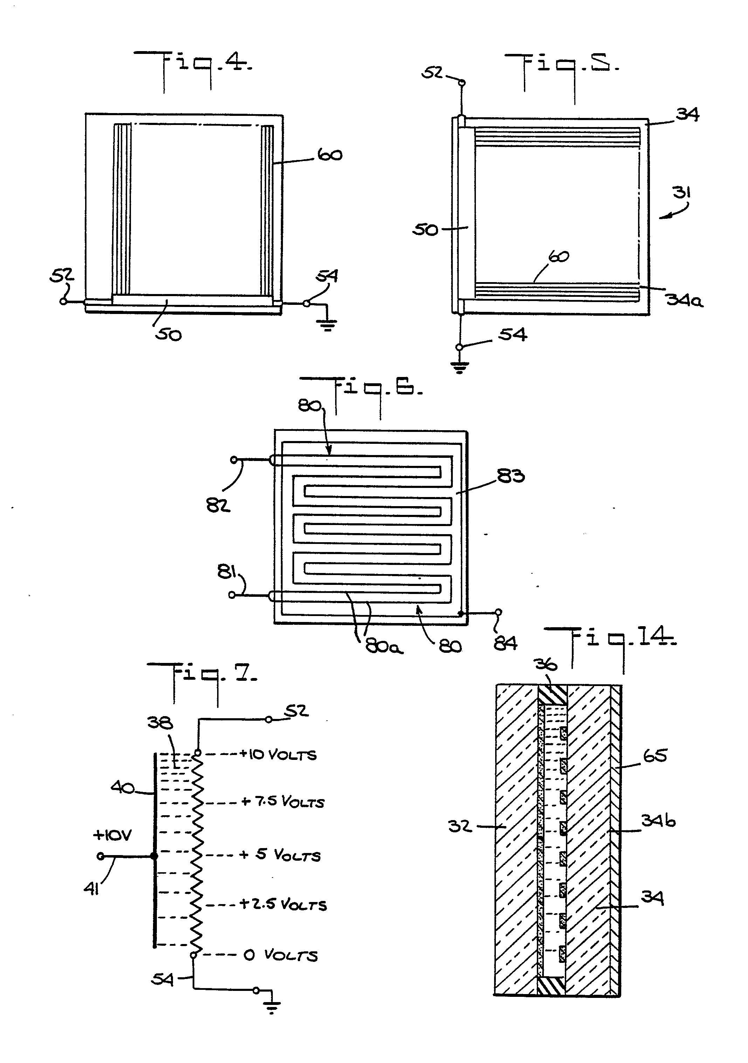

Referring now to FIGS. 1 and 2, there is shown an embodiment of the liquid crystal display device 30 in accordance with the invention. Display device 30 includes a liquid crystal display element 31 having a pair of plates 32 and 34 with gap 33 therebetween. Address electrode plate 32 is maintained in closely spaced relation to a load electrode plate 34 by means of a peripheral sealing member 36. Gap 33 between the plates contains liquid crystal display material 38. The construction of a liquid crystal display element suitable to be used in the display device of the invention is shown in the applicant's U.S. Patent No. 3,820,875, which issued on June 28, 1974. The disclosure of the '875 patent is incorporated herein by reference. The disclosure of applicant's U.S. Patent No. 4,493,531 is also incorporated herein by reference.

On the inner surface 32a of the plate 32 there is disposed means for applying the input signal to the liquid crystal material 38 in the gap 33 between an address electrode plate 32 and the load electrode plate 34 in the form of a substantially uniform electric field. The address electrode 40 is in the form of a sheet disposed on inner surface 32a of plate 32 and extending over an area in which it is desired to vary the optical appearance of the display. By way of example, display element 31 may include an address electrode 40 of rectangular shape for use in creating an analog bar graph representation.

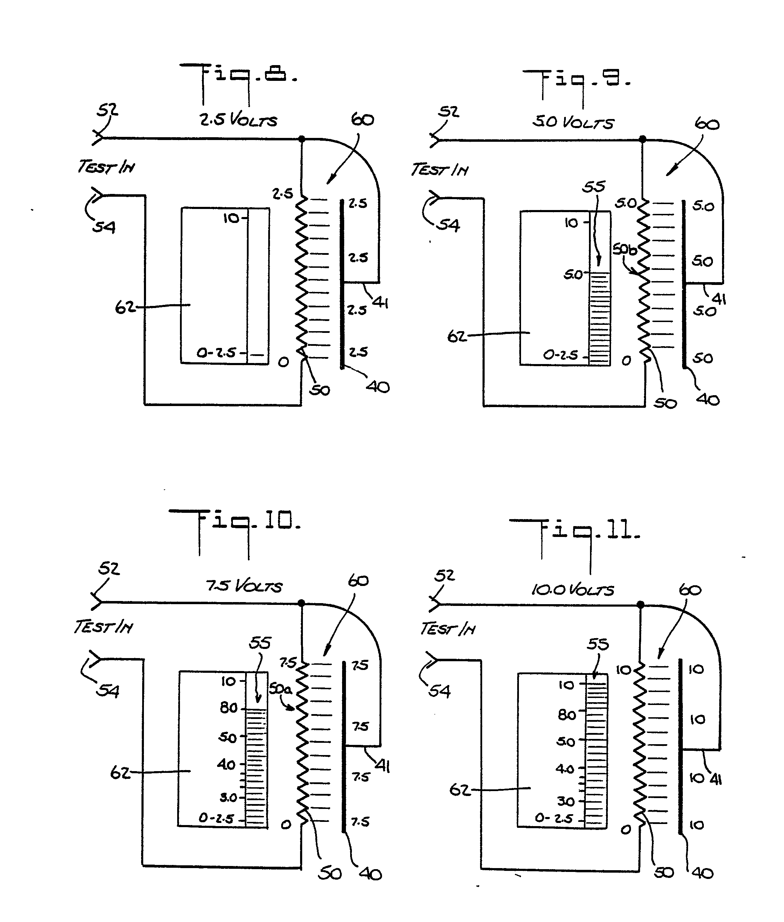

The address electrode 40 is provided with an electrical connection 41 to a source 42 of an electrical input signal as shown in FIG. 3. Electrode 40 shown in FIGS. 2 and 3 is substantially non-resistive. As a result, a voltage applied at any point to electrode 40 is present as substantially the same voltage over the entire area of electrode 40.

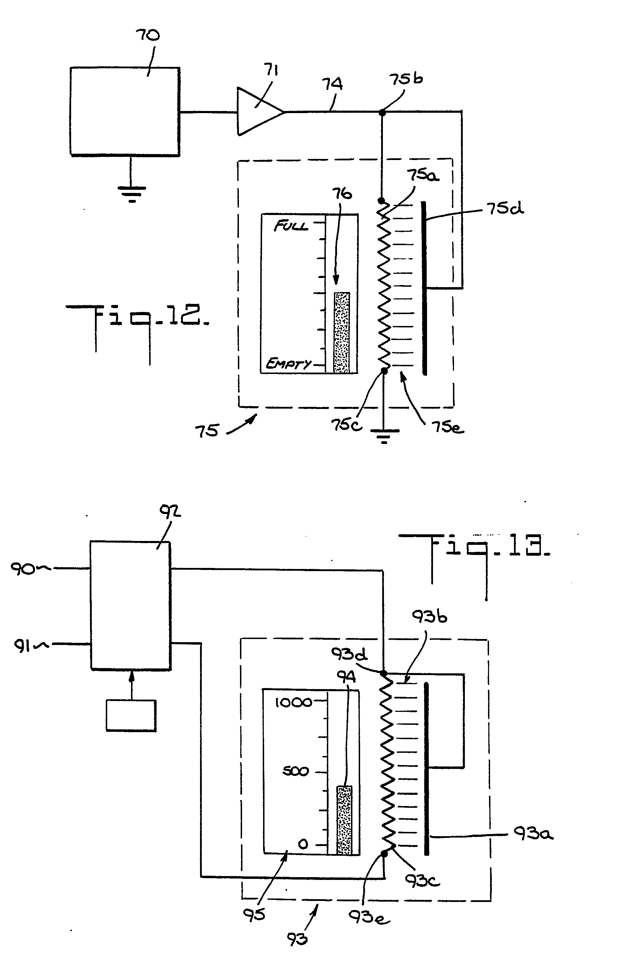

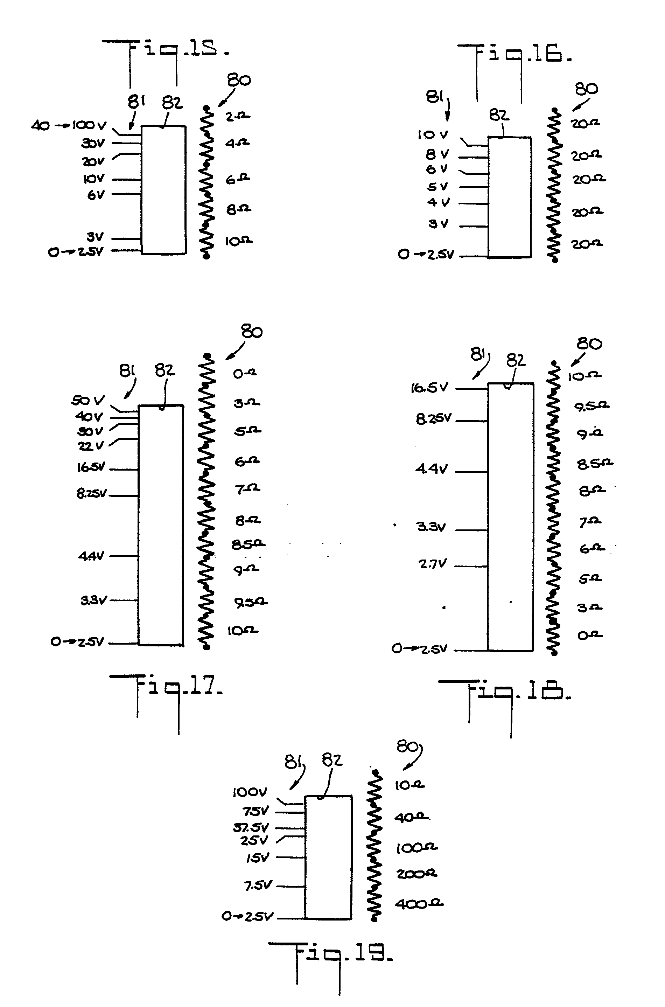

As shown in FIGS. 3 and 5, there is deposited on inner surface 34a (FIGS. 2 and 5) of load electrode plate 34, an impedance element such as resistor 50 having input terminal 52 and grounded terminal 54. Resistor 50 defines a resistive electrical path of predetermined length and configuration between the terminals 52 and 54. Thus, for example, a positive voltage of +10 volts can be applied to input terminal 52 from source 42 which is electrically connected both to input terminal 52 and to the address electrode 40. Resistor 50 is connected to an array of closely spaced substantially parallel conductive strips or load lines 60 - (FIGS. 2, 3 and 5). Resistor 50 is conditioned to be either substantially electrically linear or non-linear along its length as determined, for example, by the characteristic of the input signal to be indicated and the type of scale to be displayed. For example, resistor 50 can be printed in a tapered form to provide an audio taper characteristic, a logarithmic characteristic, or a power or exponential characteristic. Any of these characteristics can be combined with one another or with linear resistors to obtain the desired characteristic of the bar presentation, i.e., linear or non-linear with respect to the input signal.

In FIG. 5, conductive strips 60 which extend substantially horizontally are adapted to form a vertical bar graph analog presentation. In FIG. 4, conductive strips 60 which extend substantially vertically are adapted to form a horizontal bar graph analog presentation.

As shown in FIGS. 2 and 3, address electrode 50 and load lines 60 are located on spaced-apart parallel planes defined by the inner surface 32a of address plate 32 and inner surface 34a of load plate 34. It is preferable for the intervals between the load lines 60 to be as narrow as possible. The substantially non-resistive load lines 60, the conductive address electrode 40, and resistor 50 may be formed by the electrodeposition of a layer of tin oxide on glass plates 32 and 34. The tin oxide has the property of being essentially transparent, of being substantially non-resistive when deposited in sheets or thin strips, and of having linear resistance when deposited in somewhat thinner strips or lines.

Although the number of load lines 60 shown in FIG. 2 can be varied, the resulting sequence of load lines 60 should provide convenient viewing of the display device 30. By way of example, a suitable display for showing a fuel gauge reading can consist of sixteen horizontal lines 60 in a bar graph representation (FIG. 12).

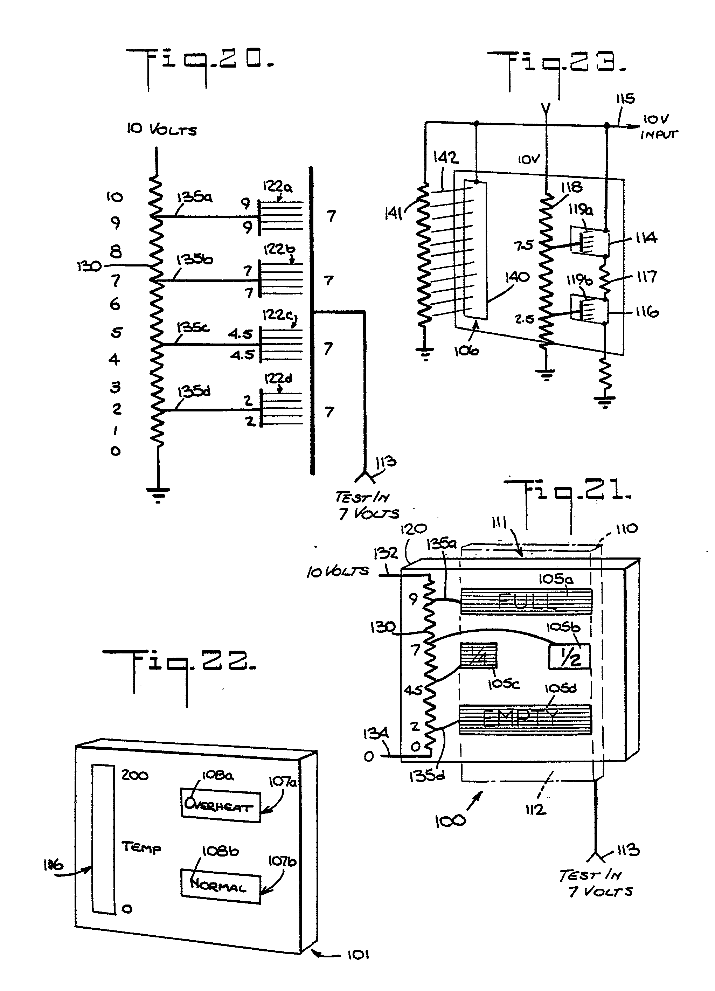

In an alternative embodiment shown in FIG. 6, a serpentine or zig-zag configuration of the type shown in FIG. 1 of the '875 patent is placed on load plate 34, consisting of long narrow resistor 80 extending between terminals 81 and 82. The narrow resistor 80 which can comprise a pair of resistor elements 80a electrically connected in parallel and disposed adjacent and parallel to one another can serve as the load electrode. Extending substantially across the area of the address electrode plate and facing the load electrode is address electrode 83 which is connected to terminal 84. With an input signal or voltage at input terminals 81 and 82, a varying voltage is present along the length of resistor 80 or along the length of each of the pair of resistor elements 80a which form the horizontal load lines.

As shown in FIG. 2, there is disposed between plates 32 and 34 and sealing member 36 a thin layer of nematic liquid crystal material 38. While nematic liquid crystal material 38 is illustrated, any field effect light scattering or light emitting dielectric may be utilized. Device 30 can operate on a reflection principle. In such a case, plate 32 and address electrode 40, or plate 34 and load lines 60, are transparent, the transparent plate being closest to the viewer. A reflective liquid crystal material 38 is chosen which is only light absorbing (as opposed to reflecting) during the application of an electric field of at least a predetermined strength. As a result, where an insufficient potential difference exists between an overlapping load line 60 and address electrode 40, light is reflected back by the liquid crystal material 38.

Control of electric fields applied to selected regions of liquid crystal material 38 permits the production of a number of optical effects. A light source can be placed on one side of device 30 in FIG. 2, for example facing the outer surface 32b of plate 32. When the device is viewed from the side of plate 34, light emission can be controlled, using transmissive liquid crystals as a "shutter" where the plates, the address electrode, and the load lines are substantially transparent. Light absorbing material can be placed on either side of plate 32. When the device 30 is viewed from the side of a transparent plate 34, light absorption can be controlled using a transflective liquid cystal material, which either transmits or reflects light.

One characteristic of the device 30 is that it is not limited to operate with light applied from an artificial source. Thus the device can also be operated simply with ambient light. In one embodiment (FIG. 14), a light reflecting material 65 is placed adjacent the outer side 34b of plate 34 and the device is viewed from the outer surface of transparent plate 32, such that light reflection of reflecting material 65 is controlled using transmissive liquid crystal material.

In another embodiment of the invention, device 30 contains liquid crystal material which is reflective. When device 30 is viewed from the same side as an artificial or ambient light source, reflection of light back to the viewer is controlled by the reflective liquid crystal, which either reflects or absorbs light, and the plate nearest to the viewer is transparent.

Voltage source or input signal source 42 in FIG. 3 provides an input voltage signal which is proportional to some condition which is to be displayed on device 30. In an alternative embodiment in FIG. 12, the input signal is fed from a transducer 70 into the input port of an amplifier 71. The amplifier 71 can be an operational amplifier which conditions the input signal to provide meaningful displays, given the predetermined voltage level at which the optical characteristics of the liquid crystal material in liquid crystal display element 75 will change. The operational amplifier 71 can be provided with circuitry to condition the operational amplifier characteristic to correspond to the characteristic of the input signal from transducer 70. For example, the operational amplifier can have a logarithmic characteristic, an exponential characteristic, a power function characteristic (see pages 209-218 of "IC Op-Amp Cookbook" by Walter G. Jung, published by Howard C. Sams & Co., Inc., 1974). If desired, operational amplifier 71 can be used to compensate for the output characteristics of transducer 70 and the resistor 75a connected to input terminals 75b and 75c. Address electrode 75d is connected to input terminal 75b. The height of the load lines 75e connected to resistor 75a at which the voltage difference between the load lines 75e and address electrode 75d is above the threshold value, forms bar presentation 76.

In FIG. 13 there is shown a voltmeter embodiment of the invention. Input terminals 90 and 91 deliver the voltage to be measured to voltage divider 92 which sets the proportional range of values of the input signal to be applied to liquid crystal display element 93. The display element 93 as address electrode 93a, load electrodes 93b and resistor 93c connected to input terminals 93d and 93e. Analog bar graph presentation 94 indicates the applied voltage with respect to indicia 95.

The principle of operation of display device 30 will be explained in connection with the schematic representations of FIGS. 7-11. By way of example, it is assumed in FIGS. 7 and 11 that a positive voltage of 10.0 volts is applied to input terminal 52 of resistor 50 from source 42 (FIG. 3) and zero voltage exists at the grounded terminal 54. It is assumed that the leads to the terminals are substantially non-resistive, so that the entire ten volt potential difference exists between terminals 52 and 54. Further, it is assumed that resistor 50 is substantially electrically linear along its electrical path, so that voltages of 0, 2.5, 5.0, 7.5 and 10.0 volts exist along the length of resistor 50 from terminal 54 to input terminal 52, as shown in FIGS. 7 and 11.

The magnitude of the input signal at input terminal 52 is identical to the signal applied to address electrode 40. Accordingly, as shown in FIG. 11, a voltage of 10.0 volts will be applied over the entire area of electrode 40, since it is assumed that the address electrode 40 is substantially non-resistive.

By way of example, source 42 in FIG. 3 can provide an output voltage of +10 volts to input terminal 52 and address electrode 40. As a result, the region of liquid crystal material 38 (at the top of resistor 50 in FIG. 11), where the particular load line 60 which is connected to resistor 50 near input terminal 52 overlaps the address sheet 40, will have no electric field applied thereto. The reason for this is that +10 volts is applied to both sides of liquid crystal material 38.

For other load lines 60 located at points one-fourth of the way down resistor 50, the voltage difference across the liquid crystal material would be at least 2.5 volts where those load lines overlap the address sheet 40. For the load lines 60 connected to resistor 50 adjacent to the grounded terminal 54, the voltage difference across the liquid crystal would be the full ten volts.

Thus, the portions of liquid crystal material 38 adjacent to address electrode 40, except for the region also adjacent to the load lines 60 extending from positions near input terminal 52, would be subjected to an electric field greater than 2.5 volts across gap 38. The strength of the electric field causes a change in the optical properties of the particular liquid crystal material 38. Reflective liquid crystal material 38, which reflects when an electric field is not applied and absorbs light if the field is sufficient, can be used. In that event, areas adjacent load lines 60 connected to resistor 50, except for those lines 60 extending from the region located near input terminal 52, would be rendered opaque (light-absorbing) to form bar 55, as shown in FIG. 11.

The voltage from source 42 varies as a function of the change of the condition being measured. The location of sufficient potential difference between the address and load plates to cause a change in optical properties shifts vertically along resistor 50. See FIGS. 8-10. Thus, if the voltage applied to the input terminal 52 and address electrode 40 equals 7.5 volts as shown in FIG. 10, the critical potential difference point may fall in the region along address electrode 40 adjacent to load lines 60 which extend from adjacent location 50a on resistor 50. Under these conditions, a voltage difference of 2.5 volts would exist at points overlapping load lines 60 along the extent of resistor 50 beneath location 50a.

An input voltage of +5.0 volts is applied as shown in FIG. 9. The potential difference of over 2.5 volts in the region of overlap with load lines 60 connected between grounded terminal 52 and the portions of resistor 50 extending below location 50b places the liquid crystal material 38 in those regions in an opaque (light-absorbing) state.

FIG. 8 illustrates the display when an input voltage of 2.5 volts is applied. Since the threshold of 2.5 volts has been selected, by way of example, the device of FIGS. 8-11 has a lower indicating limit of 2.5 volts. Thus, voltages below 2.5 volts are at the 0-2.5 volt location where the bar 55 is not present. The indicia for voltage or other variables can be placed on mask 62 disposed adjacent to the liquid crystal shown in FIGS. 8-11.

Resistor 50 can be a linear resistor extending along an imaginary y-axis from a position at the bottom end thereof as shown in FIGS. 8-11 which is connected to grounded terminal 54 (corresponding to the bottom of a vertical bar graph presentation) to a position at the top end thereof which is connected to input terminal 52 (corresponding to a position slightly above the top of a vertical bar graph presentation). The critical position along the y-axis between the ends of the resistor 50 at which the optical properties of the liquid crystal begin to change varies as a nonlinear function of the voltage V applied to the address electrode 40 and input terminal 52, as illustrated in FIGS. 8-11.

Assuming that a 2.5 volt difference between input voltage V and the voltage along a particular load line 60 causes optical properties to change, the relative height of the bar graph 55 as a percentage of the resistor length can be expressed by the equation:

$$\text{Relative vertical height} = \left(1 - \frac{2.5 \text{ volts}}{V}\right) \times 100\%$$

This equation can be used in marking the indicia for an indicator using a linear resistor. For example, an input voltage of 2.5 volts or less corresponds to a bar graph extending for 0% of the height of the resistor 50, 3 1/3 volts corresponds to a bar graph height of 25%, 5 volts correspond to 50%, 7.5 volts corresponds to 66 2/3%, 10 volts corresponds to 75%, and 25 volts corresponds to 90%. There is no need for any load lines 60 or accompanying indicia near the top of resistor 50, since extremely high input voltages would be needed to change optical properties of liquid crystal material in the vicinity of input terminal 52.

FIG. 15 shows an embodiment of the invention in which resistor 80 comprising five difference resistive portions of 2, 4, 6, 8 and 10 ohms, respectively, results in resistor 80 being non-linear. Indicia 81 which are voltage indicia are disposed to the left of a window 82 for exposing an analog bar graph presentation of a voltage applied across resistor 80. In FIG. 16, resistor 80 is formed by resistive portions of equal value, 20 ohms each. In FIG. 17, resistor 80 comprises a series arrangement of resistive portions which correspond to a logarithmic function. In FIG. 18, resistor 80 has a logarithmic function in an inverted arrangement of resistor 80 of FIG. 17. In FIG. 19, resistor 80 is formed by a series arrangement of resistive portions of progressively increasing value, 10, 40, 100, 200, and 400 ohms, respectively. In addition, resistor 80 can be formed of combinations of linear and non-linear resistive portions. FIGS. 15-19, which are simply exemplary, demonstrate how the spacing of indicia 81 can be determined by the characteristic of resistor 80, including a linear resistor in FIG. 16, non-linear resistors in FIGS. 15 and 19 and logarithmic resistors in FIGS. 17 and 18.

In an alternative embodiment of the invention - (FIGS. 20 and 21) the invention can include liquid crystal display device 100 having a plurality of flag alphanumeric legends 105a-d informing the viewer of the status of some variable being monitored - (e.g., fuel level). In FIGS. 20-21, an embodiment using a plurality of flags 105a-d is shown. In FIGS. 22-23, a different embodiment, device 101, combines a bar graph representation 106 (or any other analog indicator), with associated flags 107a-b, such that the same parameter is monitored by both the flags 107a-b and bar graph 106. The message 108a (e.g. "OVERHEAT") and message 108b (e.g. "NORMAL") to be displayed is either etched on the front plate of the device 101 or on an overlay, the message writing 108a or b being opaque and the surrounding portions of glass or overlay being transparent (or vice-versa). Accordingly, the message 108a or b is visible only when there is a change in optical properties causing the underlying liquid crystal to be light-colored so that the opaque message 108 is visible because of the contrast with bright surrounding areas visible through transparent portions of the overlay.

The flag display device 100 comprises an address plate 110 and a load plate 120, which are maintained in closely spaced relation to each other (FIG. 21). The gap between the plates contains liquid crystal material, as described above for the first embodiment.

On the inner surface of the address plate 110 is disposed an address electrode 112 (FIGS. 20 and 21), in the form of a sheet and extending over areas in which the optical appearance of flags 105a-d will vary. The address plate enables an input signal in the form of a substantially uniform electric field to be applied across the liquid crystal material. Since the address electrode 112 is substantially non-resistive, a voltage applied to it will be present over the entire area of the electrode. Connection of input terminal 113 to a source (not shown) of an input signal can be provided as described for the first embodiment (FIG. 3).

Alternately as shown in FIG. 23, several address electrodes 114 and 116 can be used, each covering the area beneath a separate flag 107a or 107b (FIGS. 22 and 23). The separate address electrodes 114 and 116 can be connected commonly at input terminal 115 so that each is at the same potential. In the alternative resistor 117 may be connected between electrodes 114 and 116 with electrode 114 connected to input terminal 115. This latter arrangement enables certain flags 107a and b to be turned on for a longer time than others. For example, if a first address electrode 114 is directly connected to a source while the other address electrode 116 is connected by resistance 117 cutting the voltage from the source in half, then the flag 107a associated with first address electrode 114 will only remain on for input voltage variations that are half as large as those needed to alter the optical properties of the other flag 107b.

In FIG. 23, load resistor 118 is connected to load electrodes 119a and b. Load resistor 141 is connected to load electrodes 142.

As shown in FIG. 20 there is deposited on the inner surface of load plate 120 a resistor 130 of predetermined length and configuration. Differing fixed voltages are placed on input terminals 132 and 134 in order to place a voltage gradient along resistor 130 (FIGS. 20 and 21). Separate leads 135a-d extend from selected locations along resistor 130 to each individual flag 105a-d. The leads 135a-d are substantially non-resistive and are electrically connected to load electrodes 122a-d (FIG. 20), which are non-resistive and can be in the form of a sheet or a series of strips. The load electrodes 122a-d extend over an area in which it is desired to vary the optical appearance of the flag 105a-d. The voltages existing at load electrodes 122a-d for each separate flag 105a-d will be fixed and distinct because of the fixed voltage placed across terminals 132 and 134 and the gradient created along resistor 130.

In the preferred embodiment of the flag display 100 (FIGS. 20 and 21), liquid crystal material in the gap 111 between the address electrode 112 and the load electrodes 122a-d changes its optical properties whenever a significant potential difference exists between overlapping address and load electrodes. Thus, since each of the flags 105a-d can have its load electrodes 122a-d connected via separate leads 135a-d to a different fixed voltage, only one of a series of separately connected flags 105a-d can possibly have a zero potential difference between its load electrode 122a-d and the address electrode 112. If several address electrodes 114 and 116 are kept at different potentials, it is possible to have effectively a zero potential at more than one at a time.

Thus, as shown in FIG. 20, if an input voltage of 7 volts is applied to a common address electrode 112 the only flag 105b with different optical properties (either light absorbing, transmitting, or reflecting) must have its load electrode 122b connected to the resistor 130 at a location where approximately 7 volts is constantly maintained. The other flags 105d, 105c and 105a will each be individually turned on (or off) in FIGS. 20 and 21 when the input voltage applied to the address electrode 112 is at approximately 2 volts, 4.5 volts, or 9 volts. The greater the magnitude of the potential difference needed across a selected liquid crystal material in order to change the optical properties of the selected liquid crystal material, the greater the range of input voltages over which any individual flag 105a-d will exhibit the optical properties associated with the quiescent state of the liquid crystal material.

The liquid crystal flag displays can be associated with the displays of bar graph analog indicators described above to provide display device 101 in FIGS. 22 and 23. The same input voltage can be applied to the address electrodes 140 and 114 of the two types of displays, or a common address electrode may even be used. Thus, an input voltage associated with a certain engine condition, for example, can be used in generating a bar graph presentation 106 as well as a flags 107a and b (FIG. 22).

Alternately, the flag display 101 can use liquid crystal material which exhibits different optical properties as long as a certain threshold voltage is exceeded. Thus, if this type of liquid crystal material were used in FIG. 20 and 2 volts was the threshold voltage of the liquid crystal material, an input voltage of 7 volts would cause the bottom two flags 105c and 105d to be turned on while the top two flags 105a and b remained off (or vice-versa). If this liquid crystal material in the embodiment of FIG. 23 is used, the same resistor 141 can be used for connection to the load electrodes 119a and b and also for connection to conductive strips 142, which are adapted to form an analog indicator presentation.

The variable optical properties of the material available for use in the viewing screen enable light transmission to be controlled in several different modes. As used throughout the above specification, the term "transmission" embodies each of the following methods of displaying waveforms: (1) a transmissive liquid crystal material, which is either transparent or opaque, is used and either (a) the view and light source (artificial or ambient) are on opposite sides of the viewing screen, or (b) the viewer and light source are on the same side of the viewing screen, with one of the surfaces on the plate farthest from the viewer being reflective; (2) a reflective liquid crystal material, which is either reflective or light absorbing, is used and the viewer and light source are on the same side of the viewing screen; (3) a transflective liquid crystal material, which is either transparent or reflective, is used and either (a) the viewer and light source are on opposite sides of the screen, or (b) the viewer and light source are on the same side of the viewing screen, with one of the surfaces on the plate farthest from the viewer being light absorbing; and (4) a light emitting material, which is either luminescent or dark, is used and the viewer is on one side of the viewing screen, with no light source required. Depending upon the particular liquid crystal material chosen, the presence of a sufficient electric field will cause the material to exhibit one of the two optical properties described above as possible for that type (e.g., transmissive, reflective, transflective) of liquid crystal material. Thus it is possible to have either a light representation in areas where an electric field exists surrounded by a dark field, or a dark representation in those areas surrounded by a light field.

Although the present invention is described utilizing liquid crystal displays, similar techniques can be applied using optoceramic or electroluminescent displays; however, the voltages required for these embodiments would be higher.

The load lines 60 can be placed in various configuration to simulate indicators commonly associated with certain measured parameters. FIG. 4 illustrates the configuration for a horizontal bar graph display. By way of example, possible displays include fuel level (FIG. 12), voltage, current, oil pressure, temperature, and engine RPM as well as vehicle velocity indicators. The voltage signals applied to the address and load plates are analog. There is no need for drivers, multiplexers, decoders, or analog-to-digital converters in producing the display in accordance with the invention.

**Claims**

1. Device for providing an optical presentation of the magnitude of an electrical input signal, comprising a liquid crystal display element having a pair of plates spaced apart from one another to form a gap therebetween and a liquid crystal material disposed in the gap, at least one of the plates being substantially transparent; and a pair of input terminals for receiving the electrical input signal; the improvement comprising:

means disposed on one of the plates and connected across the input terminals for applying the input signal thereon to the gap as a first electric field having a predetermined gradient; and

means disposed on the other of the plates and connected to one of the input terminals for introducing the input signal thereon to the gap as a substantially uniform electric field, the first and second fields thereby creating a resultant electric field in the gap that causes the liquid crystal material to provide an optical presentation of the magnitude of the electrical input signal at locations in gap where the magnitude of the resultant field is above a predetermined level.

2. Device in accordance with claim 1, wherein the means for applying the input signal to the gap as a first electric field having a predetermined gradient comprises a plurality of parallel conductive strips disposed on the surface of the plate facing the gap, and means connected to the plurality of parallel strips for distributing to each of the plurality of strips a voltage that is a function of the predetermined gradient of the first electric field to be applied to the gap.

3. Device in accordance with claim 2, wherein each of the plurality of conductive strips is substantially conductive and wherein the means for distributing a voltage to each of the plurality of strips that is a function of the predetermined gradient comprises an impedance element, with each of the plurality of strips being electrically connected to different locations along the extent of the impedance element to enable the voltage distributed to each of the plurality of strips to result in the first electric field in the gap having the predetermined gradient.

4. Device in accordance with claim 3 wherein the impedance element comprises a resistive element that extends sustantially adjacent to a corresponding end portion of each of the plurality of conductive strips, the end portion of each of the conductive strips being electrically connected in the order of the plurality of strips to different locations disposed along the length of the resistive element.

5. Device in accordance with claim 1 wherein the means disposed on one of the plates and connected across the input terminals for applying the input signal thereon to the gap as a first electric field having a predetermined gradient is conditioned to cause the magnitude of the resultant electric field at all locations in the gap to be above the predetermined level for one of the maximum and minimum levels of the input signal and to be below the predetermined level for the other of the maximum and minimum levels of the input signal.

6. Device in accordance with claim 1 wherein the liquid crystal display element is an elongated rectangle of which the width of the short axis of the elongated rectange is a minor fraction of the length of the long axis of the elongated rectangle and in which the means for applying the input signal as a first electric field is adapted to vary the magnitude of the first electric field so that the predetermined gradient extends in the direction of the long axis, whereby an optical presentation extending as a bar in the direction of the long axis of the liquid crystal display element.

7. Device in accordance with claim 1 wherein the means for introducing the input signal to the gap as a second substantially uniform electric field comprises a conductive layer disposed on the surface of the other of the plates facing the gap and opposite the means for applying the input signal to the gap as a first electric field having a predetermined gradient.

8. Device in accordance with claim 1 and further comprising indicia disposed adjacent one of the plates for indicating the magnitude of the electrical input signal.

9. Device in accordance with claim 1 in which the electrical input signal is a voltage and in which the resultant electric field in the gap causes a change in the optical characteristics of the liquid crystal material at locations in the gap where the magnitude of the resultant electric field is above the predetermined level, which provides an optical presentation of the voltage of the input signal.

10. Method for providing an optical presenation of the magnitude of an electrical input signal on a liquid crystal display element having a pair of plates spaced apart from one another to form a gap therebetween and a liquid crystal material disposed in the gap, at least one of the plates being substantially transparent, the electrical input signal being adapted to be applied to a pair of input terminals, the method characterized by the steps of:

applying the input signal as it appears across the pair of input terminals to the gap as a first electric field having a predetermined gradient; and introducing the input signal as it appears at one of the input terminals to the gap as a second and substantially uniform electric field, the first electric field of predetermined gradient and the substantially uniform second electric field the first and second fields thereby creating a resulting field in the gap that causes the liquid crystal material to provide an optical presentation of the magnitude of the electrical input signal at locations in the gap where the magnitude of the resultant field is above a predetermined level.

11. Method in accordance with claim 10 wherein the liquid crystal display element has a plurality of parallel conductive strips disposed on the surface of the plate facing the gap and in which the step of applying the input signal as it appears across the pair of input terminals to the gap as a first electric field comprises distributing to each of the plurality of parallel conductive strips a voltage that is a function of the predetermined gradient of the first electric field to be applied to the gap.

12. Method in accordance with claim 10 wherein the electrical input signal is a voltage and in which the creating of the resultant electric field in the gap causes a change in the optical characteristics of the liquid crystal material at locations in the gap where the magnitude of the resultant electric field is above the predetermined level, which provides an optical presentation of the voltage of the input signal.

13. Method in accordance with claim 11 whereby each of the plurality of conductive strips is substantially conductive and in which the step of distributing voltage to each of the plurality of strips that is a function of the predetermined gradient comprises connecting each of the plurality of strips to different locations along the extent of an impedance element to enable the voltage distributed to each of the plurality of strips to result in the first electric field in the gap having the predetermined gradient.

14. Method in accordance with claim 10 wherein the step of applying the input signal to the gap as a first electric field having a predetermined gradient is conditioned to cause the magnitude of the resultant electric field at all locations in the gap to be above the predetermined level for one of the maximum and minimum levels of the input signal and to be below the predetermined level for the other of the maximum and minimum levels of the input signal.

15. Method in accordance with any of claims 10-14 wherein the liquid crystal display element is a first elongated rectangle and in which the step of applying the input signal to the gap as an electric field having a predetermined gradient comprises the step of conditioning the magnitude of the first field to vary in the direction of the long axis of the elongated rectangular liquid crystal display, whereby an optical presentation in the direction of the elongated axis of the liquid crystal display element occurs when the optical characteristics of the liquid crystal material at locations in the gap change.

16. Method in accordance with any of claims 10-15 wherein the liquid crystal display element includes a conductive layer disposed on the surface of the other of the plates facing the gap and in which the step of introducing the electric input signal to the gap as a substantially uniform second electric field comprises introducing the input signal to the conductive layer.

Fig.1.

Fig.2.

Fig.3.

Fig.4.

Fig.5.

Fig.6.

Fig.7.

Fig.14.

# Fig. 8.

2.5 Volts

52

TEST IN

54

60

2.5

2.5

2.5

2.5

2.5

62

10

0-2.5

0

50

41

40

# Fig. 9.

50 Volts

52

TEST IN

54

60

55

62

5.0

50b

10

5.0

0-2.5

0

50

5.0

5.0

5.0

5.0

41

40

# Fig. 10.

7.5 Volts

52

TEST IN

54

60

55

50a

62

10

80

50

40

30

0-2.5

0

50

7.5

7.5

7.5

7.5

41

40

# Fig. 11.

10.0 Volts

52

TEST IN

54

60

55

62

10

80

50

40

30

0-2.5

0

50

10

10

10

10

10

41

40

Fig.12.

Fig.13.

Fig.15.

81 82 80

40 → 100 V
30V
20V
10V
6V

3V
0 → 2.5V

2Ω
4Ω
6Ω
8Ω

10Ω

Fig.16.

81 82 80

10 V
8 V
6 V
5 V
4 V
3 V

0 → 2.5V

20Ω
20Ω
20Ω
20Ω
20Ω
20Ω

Fig.17.

81 82 80

50 V
40 V
30 V
22 V

16.5V

8.25V

4.4V

3.3V

0 → 2.5V

0Ω
3Ω
5Ω
6Ω
7Ω
8Ω
8.5Ω
9Ω
9.5Ω
10Ω

Fig.18.

81 82 80

16.5 V

8.25V

4.4V

3.3V

2.7V

0 → 2.5V

10Ω
9.5Ω
9Ω
8.5Ω
8Ω
7Ω
6Ω
5Ω
3Ω
0Ω

Fig.19.

81 82 80

100V
75V
37.5V
25V
15V
7.5V

0 → 2.5V

10Ω
40Ω
100Ω
200Ω
400Ω

# Fig.20.

10 VOLTS

10
9
8
7
6
5
4
3
2
1
0

130

135a  9  122a
      9
135b  7  122b
      7
135c  4.5  122c
      4.5
135d  2  122d
      2

7
7
7
7

113

TEST IN
7 VOLTS

# Fig.23.

115  10V
     INPUT

142
141  10V
140  118
     119a  7.5  114
106  119b  2.5  117
          116

# Fig.21.

120  135a  111  110
132
10 VOLTS
     9  105a  FULL
130     105b
     7  1/4  1/2
     45  105c  105d
134  2  EMPTY
     0
135d
100  112

113

TEST IN
7 VOLTS

# Fig.22.

200  108a  107a
     OVERHEAT
TEMP
116  108b  107b
     NORMAL
0

101